# FASCICULE DE BREVET EUROPEEN

(11) **EP 2 632 982 B1**
(45) Date de publication et mention de la délivrance du brevet: **26.11.2014**
(21) Numéro de dépôt: 11787715.9
(22) Date de dépôt: 18.10.2011
(51) Int. Cl.: C08L 53/00, C08K 3/00, C08K 3/22, C08K 3/30, C08K 3/34, C08K 3/38, H01B 3/30, C08L 33/16, F16L 57/04, H01B 3/44

(54) **COMPOSITIONS THERMOPLASTIQUES A HAUTE TENUE THERMOMECANIQUE ET IGNIFUGÉES, EN PARTICULIER POUR LES CÂBLES ÉLECTRIQUES**
FLAMMHEMMENDE THERMOPLASTISCHE ZUSAMMENSETZUNGEN MIT HOHER THERMOMECHANISCHER FESTIGKEIT, IM BESONDEREN FÜR STROMKABEL
FLAME-RETARDED THERMOPLASTIC COMPOSITIONS OF HIGH THERMOMECHANICAL STRENGTH, IN PARTICULAR FOR ELECTRIC CABLES

(30) Priorité: 26.10.2010 FR 1058757
(43) Date de publication de la demande: 04.09.2013
(73) Titulaire: Arkema France, 92700 Colombes (FR)
(72) Inventeur: JOUSSET, Dominique, F-27471 Serquigny (FR); FLAT, Jean-Jacques, F-27170 Goupillieres (FR); GEORLETTE, Pierre, 84965 Omer (IL)
(74) Mandataire: Gavin, Pablo
(86) Numéro de dépôt international: PCT/FR2011/052431
(87) Numéro de publication internationale: WO 2012/056146

(56) Documents cités:
- EP-A1- 0 704 489
- EP-A1- 0 816 422
- DE-A1- 19 857 965
- FR-A1- 2 912 150
- US-A1- 2004 242 751

## Description

### Domaine de l'invention

L'invention a pour objet des compositions ignifugées thermoplastiques souples à haute tenue thermomécanique, à base de polyoléfines fonctionnalisées greffées par des motifs polyamides contenant au moins une association de trois agents présentant des propriétés ignifuges. La présente invention concerne également l'utilisation de cette composition en tant que couche de revêtement (couche extérieure) dans un câble, tuyau ou analogue ainsi qu'en tant que matériau constitutif (couche intérieure) d'une gaine de protection, ainsi qu'un tel câble, tuyau, gaine de protection ou analogue comprenant au moins une des couches ou revêtements ou matériaux constitué par cette composition.

Ces compositions sont utiles en câblerie pour isoler et protéger des câbles électriques, des fibres optiques et pour la fabrication de pièces électriques telles que des connecteurs électriques, ainsi qu'en électrotechnique pour mouler des objets tels que des boîtiers.

Les polymères thermoplastiques tels que les polyéthylènes, les polyamides ou leurs mélanges sont de bons isolants électriques et sont faciles à mettre en oeuvre. Ils sont utilisés pour faire des boîtiers et des connecteurs électriques et aussi des revêtements de câbles. Les installations électriques peuvent être à l'origine de courts circuits et s'enflammer, elles peuvent être aussi mises au contact d'une flamme et donc s'enflammer et propager l'incendie le long des chemins de câbles. Il existe différents additifs pour rendre ces matières ininflammables, certains à base de produits halogénés, d'autres sans halogène.

Selon le test de propagation de flamme UL 94 selon la norme ISO 1210, le classement V0 est le meilleur classement qui correspond à un matériau difficilement inflammable, ne produisant pas de gouttes enflammées lors du test.

Pour le classement V1, le matériau est plus facilement inflammable mais ne produit pas de gouttes enflammées lors du test. Quant au classement V2, en plus de l'inflammabilité plus facile que pour V0, des gouttes enflammées peuvent se produire lors du test.

Pour des matériaux encore plus inflammables, on donne le classement NC (non classé).

Ainsi, dans les applications comme le recouvrement de câbles électriques, pièces électriques et électrotechniques, automobile, outre leur caractère isolant électrique, les matériaux doivent avant tout posséder de haut niveau de résistance au feu (ignifugation). Par ailleurs, ces matériaux ou compositions doivent présenter une bonne tenue mécanique, en particulier de bonnes propriétés ultimes (allongement et contrainte à la rupture), mais également d'excellentes propriétés thermomécaniques, comme le fluage en température, ainsi qu'une bonne tenue à la thermo-oxydation, c'est à dire la capacité du matériau à conserver ses propriétés mécaniques lors de vieillissements dans l'air chaud.

Néanmoins, compte tenu du fait que, pour les compositions thermoplastiques, l'amélioration des propriétés de résistance au feu va à l'encontre des propriétés mécaniques et thermomécaniques, à l'heure actuelle, il n'existe pas sur le marché de matériaux ou compositions thermoplastiques présentant des caractéristiques de hautes performances pour l'ensemble de ces quatre propriétés combinées.

### Etat de l'art

On connaît le document EP 629678 qui décrit des alliages thermoplastiques comprenant des mélanges de polyamide et de polypropylène dans lesquels on ajoute une zéolithe (agent déshydratant) et du polyphosphate d'ammonium pour les rendre ignifuges. On connaît également le document EP 704489 qui décrit des compositions constituées d'une matrice en polyamide dans laquelle sont dispersés des nodules de polyoléfine réticulée et des ignifugeants choisis parmi l'hydroxyde de magnésium, le décabromodiphénylether, le cyanurate de mélamine et le pentaérithritol.

Ces deux types de compositions présentent certes une bonne tenue au feu mais ces performances sont obtenues au détriment de la ductilité des matériaux (perte considérable d'allongement à la rupture, caractère fragile en choc à température ambiante). Par ailleurs, il est constaté que la stabilité thermique de ces matériaux était insuffisante. Par stabilité thermique, on entend la conservation des propriétés mécaniques (et plus particulièrement de l'allongement à la rupture) après divers vieillissements thermiques (par exemple une semaine à 120°C).

On connaît également le document WO 07141449, au nom de la demanderesse, qui décrit une composition thermoplastique comportant majoritairement (en poids de la composition) un copolymère greffé à blocs polyamides, de polyphosphate d'ammonium ainsi qu'une faible quantité de zéolithe. Bien que présentant des niveaux d'ignifugation de haut niveau (classement UL94-V0), ces matériaux souffrent, d'une part, de pertes des propriétés mécaniques initiales vis-à-vis des matrices non ignifugées formées par le même copolymère greffé à blocs polyamides ainsi que, d'autre part, de la perte de leurs propriétés mécaniques lors de vieillissements thermo-oxydants en étuve ventilée, par exemple d'une semaine à une température de 150°C.

On notera que le copolymère greffé à blocs polyamide ne présente aucune résistance à la propagation de la flamme (classement UL94-NC pour APOLHYA^{®}); comme on le constate dans les tests concernant la composition intitulée « DM13 ».

Le poly-acrylate de pentabromobenzyle, ou poly(pentabromobenzylacrylate), a été merltionné pour la première fois dans le document US 4128709 qui décrit la polymérisation en solution du monomère acrylate de pentabromobenzyle.

On connaît également les documents US 4996276 ET US 5072028 qui décrivent des préparations pour l'obtention du poly(pentabromobenzylacrylate), par polymérisation en masse ou en faisant réagir un sel alcalin d'un acide insaturé avec un halogénure de benzyle polybromo substitué dans un solvant non miscible à l'eau et avec une catalyse à transfert de phase.

### Brève description de l'invention

La présente invention entend remédier aux inconvénients des matériaux de l'art antérieur en proposant une composition thermoplastique répondant à l'ensemble des exigences spécifiques aux câbles électriques, aux fibres optiques et plus généralement aux pièces isolantes dans les domaines électriques et électrotechniques.

La demanderesse a maintenant trouvé une nouvelle composition ignifugée thermoplastique comprenant un copolymère greffé à blocs polyamides constitué d'un tronc en polyoléfine et d'en moyenne au moins un greffon en polyamide dans lequel les greffons sont attachés au tronc par les restes d'un monomère insaturé (X) ayant une fonction capable de réagir avec un polyamide, les restes du monomère insaturé (X) sont fixés sur le tronc par greffage ou copolymérisation depuis sa double liaison, caractérisée en ce que caractérisée en ce que la composition comprend :
- entre 60% et 70% en poids du copolymère greffé à blocs polyamides,
- entre 22% et 28% en poids de poly(pentabromobenzylacrylate),
- entre 4% et 8% en poids d'un agent ignifugeant de synergie choisi parmi le trioxyde d'antimoine, les dérivés de l'étain, du molybdène et/ou du bismuth ainsi que les oxydes de bore et zinc, les borates de calcium, le sulfate de calcium et/ou le stannate de zinc,
- entre 0.5 et 5% en poids d'argile traité organophile.

Avantageusement, le tronc en polyoléfine contenant (X) est choisi parmi les copolymères éthylène-anhydride maléique et éthylène-(méth)acrylate d'alkyleanhydride maléique. Selon un aspect particulièrement intéressant pour la composition, le nombre de monomère X fixé sur le tronc polyoléfine est supérieure ou égal à 1,3 et/ou inférieur ou égal à 10. En outre, le greffon en polyamide a une masse molaire comprise entre 1000 et 5000 g/mole et de préférence entre 2000 et 3000.

Par ailleurs, on ne sortirait pas du cadre de la présente invention si on remplaçait tout ou partie du tronc en polyoléfine et/ou des greffons en polyamide par leur mélange respectif avec les argiles modifiées, lesdits mélanges étant connus par l'Homme de l'Art sous le terme de « nanocomposites ».

Selon un mode de réalisation préférée, l'argile traitée est présent dans la composition, en poids, entre 1% et 4%, de préférence entre 2% et 3,5%.

Selon un mode de réalisation préférée, le poly(pentabromobenzylacrylate) est présent dans la composition, en poids, entre 23% et 27%, de préférence de 24% et 26%.

Selon un mode de réalisation préférée, l'agent ignifugeant de synergie est présent dans la composition, en poids, entre 5% et 7%, de préférence entre 5,5% et 6,5%. De préférence, l'agent de synergie est le trioxyde d'antimoine.

Selon une possibilité offerte par l'invention, la composition consiste en un mélange du copolymère greffé à blocs polyamides, de poly(pentabromobenzylacrylate) et de trioxyde d'antimoine, et d'argile traitée organophile.

Selon une possibilité offerte par l'invention, la composition comprend en outre des antioxydants, des anti U.V., des charges minérales, des agents anti-gouttes et/ou des pigments de coloration. On ne sortirait pas du cadre de la présente invention si on ajoutait des zhéolithes aux compositions thermoplastiques revendiquées.

Selon une variante de réalisation préférée, le monomère insaturé (X) du copolymère greffé à blocs polyamides est l'anhydride maléique.

L'invention se rapporte aussi à l'utilisation de la composition décrite ci-dessus en tant que couche de revêtement de câble ainsi que de pièces électriques telles que des connecteurs électriques ou en électrotechnique pour mouler des objets tels que des boîtiers.

Cependant, ces compositions peuvent aussi être utilisées pour réaliser des couches de revêtement ou manchons de protection thermique pour des lignes (ou tuyaux) de transfert de fluides dans l'industrie automobile, en particulier carburant ou liquide de refroidissement).

La présente invention concerne également un câble ou tuyau présentant au moins deux couches dont au moins une couche est formée par la susdite composition thermoplastique tel qu'énoncée ci-dessus.

### Description détaillée de l'invention

S'agissant du copolymère greffé à blocs polyamides, il peut être obtenu par réaction d'un polyamide avec les restes d'un monomère insaturé X fixé par greffage ou copolymérisation sur un tronc en polyoléfine.

Ce monomère X peut être par exemple un époxyde insaturé ou un anhydride d'acide carboxylique insaturé. L'anhydride d'acide carboxylique insaturé peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (meth)acrylique.

S'agissant du tronc en polyoléfine, on définit une polyoléfine comme un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE (« linear low density polyethylene », ou polyéthylène basse densité linéaire), VLDPE (« very low density polyehylene », ou polyéthylène très basse densité) et le polyéthylène métallocène.
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

Avantageusement, les troncs en polyoléfine sur lesquels sont attachés les restes de X sont des polyéthylènes greffés par X ou des copolymères de l'éthylène et de X qu'on obtient par exemple par polymérisation radicalaire à haute pression.

S'agissant des polyéthylènes sur lesquels on vient greffer X on entend par polyéthylène des homo- ou copolymères.

A titre de comonomères, on peut citer :
- les alpha-oléfines, avantageusement celles ayant de 3 à 30 atomes de carbone. Des exemples ont été cités plus haut. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.

- les esters vinyliques d'acides carboxyliques saturés tels que par exemple l'acétate ou le propionate de vinyle.
- les diènes tels que par exemple le 1,4-hexadiène.
Le polyéthylène peut comprendre plusieurs des comonomères précédents.

Avantageusement le polyéthylène qui peut être un mélange de plusieurs polymères, comprend au moins 50% et de préférence 75% (en moles) d'éthylène, sa densité peut être comprise entre 0,86 et 0,98 g/cm³. Le MFI (« Melt Flow Index », indice de viscosité mesuré à 190°C sous une charge de 2,16 kg) est compris avantageusement entre 20 et 1000 g/10 min.

A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène,
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.

Le greffage est une opération connue en soi.

S'agissant des copolymères de l'éthylène et de X, c'est-à-dire ceux dans lesquels X n'est pas greffé, il s'agit des copolymères de l'éthylène, de X et éventuellement d'un autre monomère pouvant être choisi parmi les comonomères qu'on a cité plus haut pour les copolymères de l'éthylène destinés à être greffés.

On utilise avantageusement les copolymères éthylène-anhydride maléique et éthylène - (méth)acrylate d'alkyle - anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI est compris entre 5 et 100 (190°C - 2,16 kg). Leur température de fusion est comprise entre 80 et 120°C. Les (méth)acrylates d'alkyle ont déjà été décrits plus haut.

Avantageusement, il y a en moyenne au moins deux moles de X par chaîne attachées sur le tronc en polyoléfine et de préférence de 2 à 5. L'homme de métier peut déterminer facilement par analyse IRTF (analyse Infra Rouge à Transformée de Fourrier) le nombre de ces moles X. Par exemple si X est l'anhydride maléique et la masse molaire moyenne en poids de la polyoléfine de 95 000 g/mol, on a trouvé que ceci correspondait à une proportion d'anhydride d'au moins 1,5 % en poids de l'ensemble du tronc de polyoléfine contenant X et de préférence de 2,5 à 4%. Ces valeurs associées à la masse des polyamides déterminent la proportion de polyamide et de tronc dans le copolymère greffé à blocs polyamides.

S'agissant du polyamide, on entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que le caprolactame, oenantholactame et lauryllactame;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
- ou des mélanges de plusieurs monomères ce qui conduit à des copolyamides. On peut utiliser des mélanges de polyamides. On utilise avantageusement le PA 6, le PA 11, le PA 12, le copolyamide à motifs 6 et motifs 11 (PA 6/11), le copolyamide à motifs 6 et motifs 12 (PA 6/12), et le copolyamide à base de caprolactame, hexaméthylènediamine et acide adipique (PA 6/6-6).

Le degré de polymérisation peut varier dans de larges proportions, selon sa valeur c'est un polyamide ou un oligomère de polyamide. Dans la suite du texte on utilisera indifféremment les deux expressions pour les greffons.

Pour que le polyamide ait une terminaison monoamine il suffit d'utiliser un limiteur de chaîne de formule 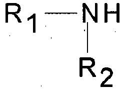 dans laquelle :
R₁ est l'atome d'hydrogène ou un groupement alkyle linéaire ou ramifié contenant jusqu'à 20 atomes de carbone,
R₂ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine, l'oleylamine ou butyle-amine, hexyle-amine et de manière générale toutes les monoamine de type R₂-NH2.

Avantageusement le polyamide à extrémité amine a une masse molaire comprise entre 1000 et 5000 g/mole et de préférence entre 2000 et 3000.

Les monomères aminoacides ou lactames préférés pour la synthèse de l'oligomère monoaminé selon l'invention sont choisis parmi le caprolactame, l'acide amino-11-undécanoïque ou le lauryllactame.

La polycondensation définie ci-dessus s'effectue selon les procédés habituellement connus, par exemple à une température comprise en général entre 200 et 350 °C, sous vide ou sous atmosphère inerte, avec agitation du mélange réactionnel. La longueur de chaîne moyenne de l'oligomère est déterminée par le rapport molaire initial entre le monomère polycondensable ou le lactame et le limitateur monofonctionnel de polymérisation. Pour le calcul de la longueur de chaîne moyenne, on compte habituellement une molécule de limitateur de chaîne pour une chaîne d'oligomère.

L'addition de l'oligomère monoaminé de polyamide sur le tronc de polyoléfine contenant X s'effectue par réaction d'une fonction amine de l'oligomère avec X. Avantageusement X porte une fonction anhydride ou acide, on crée ainsi des liaisons amides ou imides.

On réalise en général l'addition de l'oligomère à extrémité amine sur le tronc de polyoléfine contenant X de préférence à l'état fondu. On peut ainsi, dans une extrudeuse double vis corotative engrenante auto nettoyante ou dans tout autre outil adapté (mélangeur interne, co-malaxeur de type Buss, ...) mélanger à l'état fondu l'oligomère et le tronc à une température généralement comprise entre 180 et 350 °C. Le temps de séjour moyen de la matière fondue dans l'extrudeuse peut être compris entre 5 secondes et 5 minutes, et de préférence entre 20 secondes et 1 minute. Le rendement de cette addition est évalué par extraction sélective des oligomères de polyamide libres c'est-à-dire ceux qui n'ont pas réagi pour former le copolymère greffé à blocs polyamides final.

La préparation de tels polyamides à extrémité amine ainsi que leur addition sur un tronc de polyoléfine contenant X est décrite dans les brevets US 3976720, US 3963799, US 5342886 et FR 2291225.

Les copolymères greffés à blocs polyamides de la présente invention sont caractérisés par une organisation structurée à l'échelle nanométrique avec des lamelles de polyamide d'épaisseur comprise entre 10 et 50 nanomètres.

Avantageusement la proportion de tronc polyoléfine est de 50% à 90% et celle de polyamide à terminaison amino de 10 à 50%.

Le copolymère greffé à blocs polyamide de l'invention a une très bonne résistance au fluage à des températures au moins égales à 80°C et pouvant aller jusqu'à 200°C, c'est à dire qu'ils ne présentent pas de rupture sous une charge de 2 MPa.

Les copolymères greffés à blocs polyamide de l'invention peuvent être préparés par mélange à l'état fondu dans des extrudeuses (mono mais de préférence bi vis), des co-malaxeurs de type BUSS, des mélangeurs internes et en général les dispositifs habituels de mélange des polymères thermoplastiques et de préférence les extrudeuses bi-vis corotative engrenantes auto nettoyantes. Les mélanges de l'invention peuvent comprendre aussi des agents fluidifiants tels que de la silice, de l'éthylène-bis -amide, du stéarate de calcium ou du stéarate de magnésium. Ils peuvent aussi comprendre des antioxydants, des anti U.V., des charges minérales et des pigments de coloration.

Les compositions selon l'invention peuvent être préparées selon deux procédés différents.

On peut les préparer selon un procédé en deux étapes : dans une première étape, on prépare d'abord le copolymère greffé à blocs polyamide en faisant réagir le tronc polyoléfine porteur du reste X avec le polyamide. Puis, dans une seconde étape, on mélange à l'état fondu le copolymère greffé à blocs polyamide précédemment préparé avec les additifs ignifugeants: poly(pentabromobenzylacrylate), trioxyde d'antimoine et argile traitée organophile.

On peut aussi préparer les compositions selon l'invention selon un procédé en une étape au cours de laquelle le tronc polyoléfine porteur du reste X, le polyamide et les additifs ignifugeants, à savoir le poly(pentabromobenzylacrylate), le trioxyde d'antimoine et l'argile traitée organophile sont tous mélangés ensemble.

S'agissant du poly(pentabromobenzyl(meth)acrylate), c'est un composé appartenant à la famille des polymères aromatiques polyhalogénés. Plus particulièrement, le polymère « poly(pentabromobenzyl(meth)acrylate) » résulte de la polymérisation d'esters aromatiques polybromosubstitués d'acides α, β insaturés de la formule suivante : 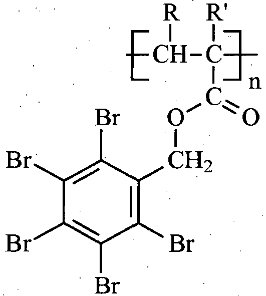 où R et R' sont des atomes d'hydrogène ou des groupements alkyle.

S'agissant de l'agent ignifugeant de synergie, il est entendu comme ayant une fonction de synergie avec le poly(pentabromobenzyl(meth)acrylate), de manière à augmenter de manière exponentielle (et non évidente avant la réalisation des essais sur des compositions selon l'invention) les propriétés ignifugeantes par ailleurs conférées par ce dernier.

De préférence, cet agent ignifugeant de synergie est le trioxyde d'antimoine mais on ne sortirait pas du cadre de l'invention si on substituait le trioxyde d'antimoine par des dérivés de l'étain, du molybdène ou du bismuth connus par l'homme de l'art pour fonctionner également en synergie avec les ignifugeants bromés. On pourrait également envisager de remplacer le trioxyde d'antimoine par un autre oxyde d'antimoine (Sb2O5) ou un sulfure d'antimoine (SbS3). De même, on pourra envisager les oxydes de bore et zinc, les borates de calcium, le sulfate de calcium ou le stannate de zinc.

Dans la suite, les essais sur les compositions selon l'invention ont été réalisés sur la base du trioxyde d'antimoine qui présente les résultats les plus satisfaisants, néanmoins, les autres composés agissant comme agent de synergie du poly(pentabromobenzylacrylate) montrent également des résultats satisfaisants dans le cadre d'une composition selon l'invention.

S'agissant plus spécifiquement du trioxyde d'antimoine, ce produit se présente classiquement sous la forme d'une fine poudre blanche insoluble dans les solvants organiques, c'est pourquoi ce composé est ici présent sous forme de mélanges maître dans une matrice polyéthylène qui lui sert de support. Bien entendu, on pourra prévoir d'adjoindre du trioxyde d'antimoine à la composition thermoplastique par d'autres moyens, voire par incorporation de trioxyde d'antimoine pur ou quasi-pur.

On ne sortirait pas non plus du cadre de l'invention si on ajoutait aux compositions des agents « anti gouttes » comme des produits à base de silicone (PDMS) ou des produits fluorés comme le PTFE.

S'agissant de l'argile traitée organophile, il s'agit d'argiles qui se présentent sous forme de feuillets. Ces argiles sont rendues organophiles par intercalation entre ceux-ci d'agents gonflants qui sont des molécules organiques ou des polymères, et sont obtenues en particulier selon un procédé tel que décrit dans le document US 5578672.

De préférence, les argiles utilisées sont du type smectite, soit d'origine naturelle comme notamment les montmorillonites, les bentonites, les saponites, les hectorites, les fluorohectorites, les beidellites, les stibensites, les nontronites, les stipulgites, les attapulgites, les illites, les vermiculites, les halloysites, les stevensites, les zéolithes, les terres a foulon et le mica, soit d'origine synthétique comme les permutites.

A titre d'exemple on peut citer les argiles organophiles décrites dans le brevet US 6,117,932. De préférence l'argile est modifiée avec une substance organique par une liaison ionique avec un ion onium ayant 6 atomes de carbone ou plus. Si le nombre d'atomes de carbone est inférieur a 6 l'ion onium organique est trop hydrophile et donc la compatibilité avec le copolymère oléfinique peut décroître. A titre d'exemple d'ion onium organique on peut citer les ions hexylammonium, les ions octylammonium, les ions 2- ethylhexylammonium, les ions dodecylammonium, les ions laurylammonium, les ions octadecylammonium (stearylammonium), les ions dioctyldimethylammonium, les ions trioctylammonium, les ions distearyldimethylammonium, les ions stearyltrimethylammonium et les ions laurate d'ammonium. D'autres ions peuvent être utilises, tels que les ions phosphonium et sulfonium. On peut également utiliser des agents tensioactifs amphotères, des dérivés d'amines aliphatiques, aromatiques ou arylaliphatiques, de phosphines et de sulfures.

Il est recommandé d'utiliser une argile ayant la plus grande surface possible de contact avec le polymère. Plus la surface de contact est grande plus la séparation des lamelles d'argile sera importante. La capacité d'échange cationique de l'argile est de préférence comprise entre cinquante et deux cents milliéquivalents pour 100 grammes (g). Si la capacité est inférieure à cinquante, l'échange des ions oniums est insuffisant et la séparation des lamelles d'argile peut être difficile. Au contraire si la capacité est supérieure à deux cents, la force de liaison entre les lamelles d'argile est si forte que la séparation des lamelles peut être difficile. A titre d'exemple d'argile on peut citer la smectite, la montmorillonite, la saponite, l'hectorite, la beidellite, la stibensite, la nontronite, la vermiculite, l'halloysite et le mica. Ces argiles peuvent être d'origine naturelle ou synthétique. La proportion d'ion onium organique est avantageusement entre 0,3 et 3 équivalents de la capacité d'échange ionique de l'argile. Si la proportion est inférieure à 0,3 la séparation des lamelles d'argile peut être difficile. Si la proportion est supérieure à 3 il peut y avoir dégradation du polymère. La proportion d'ion onium organique est de préférence entre 0,5 et 2 équivalents de la capacité d'échange ionique de l'argile. Ces argiles organophiles présentent une aptitude élevée à la dispersion dans des milieux polymériques sous taux de cisaillement faible et modifient le comportement rhéologique de ces milieux. Toutefois d'autres types de charges lamellaires, comme les phosphates de zirconium ou de titane, peuvent être utilisés selon l'invention.

### Obtention des formulations testées :

Les formulations décrites ci-dessous sont préparées par compoundage grâce à une extrudeuse double vis co-rotatives engrenant auto-nettoyante de marque COPERION ZSK40 de diamètre 40 millimètres (mm), de longueur 40 fois son diamètre (soit 160 centimètres), chauffée avec un profil plat à 250°C avec un débit de 70 kg/h (kilogramme par heure) et une vitesse de rotation de 300 tr/min (tour par minute), les polymères étant introduits en alimentation principale et les additifs en poudre par gavage latéral dans le polymère fondu.

De manière générale, on entend par « compoundage » une technique d'obtention de polymères ou de mélanges de polymères bien connue de l'Homme de l'Art et qui consiste en une mise en forme du formulat (se présentant par exemple sous forme de joncs en sortie de malaxeur) par extrusion au travers d'une filière à trous circulaires, puis coupe des joncs refroidis et séchage pour fabriquer des granulés de quelques millimètres de diamètre.

### Matériaux employés pour former les formulations testées:

**Apolhya^{®} :** commercialisé par la demanderesse, est un produit de la réaction d'un mélange d'oligoPA6 mono aminé de Mn 2500 g/mol (30% poids) et de Domamid 24 (20%) avec 50% d'un terpolymère d'éthylène, d'acrylate d'éthyle (AE) et d'anhydride maléique (MAh) possédant 17 % AE et 3% MAh et un MFI (190°C, 2.16kg) de 70 g/10 min.

**Lotader^{®} :** terpolymère d'éthylène, acrylate d'éthyle (AE) et d'anhydride maléique (MAh), commercialisé par la demanderesse et possédant 17% AE, 3% MAh et un MFI (2.16 kg, 190°C) de 70 g/10 min.

**Domamid^{®}** 24 : PA6 commercialisé par la société DOMO, possédant une viscosité relative de 2.4 mesuré à 1% dans l'acide sulfurique à 96% selon la norme ISO 307.

**Domamid^{®}** 27 : PA6 commercialisé par la société DOMO, possédant une viscosité relative de 2.7 mesuré à 1% dans l'acide sulfurique à 96% selon la norme ISO 307.

**TC Orgalloy :** Polypropylène greffé par des greffons PA comme selon brevet EP 0342066.

**STAMILAN^{®} P** : Polypropylène produit par la société Sabic.

**FR 1025^{®} :** polyacrylate de pentabromobenzyle, commercialisé par la société ICL-IP.

**Polytriox^{®} AOPE 8020 :** mélange maître à 80% de trioxyde d'antimoine dans une matrice polyéthylène commercialisé par la société Produit Chimique de Lucette.

**MM nano argile :** Mélange maître à 60% de Nanofil SE3010 (produit par la société Süd Chemie) dans le Lotryl® 28MA07 qui est un copolymère d'éthylène et d'acrylate de méthyle (AMe) comprenant 28% poids d'AMe et présentant un MFI (à 190°C, 2.16 kg mesuré selon la norme ISO 1133) de 7 g/10 min. Ce mélange maître est réalisé par exemple sur un ko-malaxeur Buss PR46 à un débit de 13 kg/h, une vitesse de rotation du ko-malaxeur de 280 tr/min et un profil de température plat de 230°C, le copolymère EMA et la charge étant introduits au premier puits.

**Exolit^{®} AP766 :** produit à base de polyphosphate d'ammonium produit par la société CLARIANT possédant un taux de phosphore de 24% et un taux d'azote de 15%.

**Siliporite^{®} NK10AP:** tamis moléculaire de type zéolithe 4A produit par la société CECA.

**Magnifin^{®} H5:** Magnesium Di Hydroxyde commercialisé par la société Albemarle.

La présente invention est illustrée plus en détail par les exemples non limitatifs suivants.
Exemple 1 : la composition intitulée « DM1 » est une formulation entrant dans le cadre de la présente invention. Elle comprend, en pourcentage massique de la composition totale, 61% d'Apolhya®, 28,5% de FR1025 et 6% de Polytriox AOPE 8020 et 4,5% d'argile traitée organophile.
Exemple 2 : la composition intitulée « DM2 » est une formulation entrant dans le cadre de la présente invention. Elle comprend, en pourcentage massique de la composition totale, 69,5% d'Apolhya®, 22,3% de FR1025 et 6% de Polytriox AOPE 8020 et 2,2% d'argile traitée organophile.
Exemple 3 : la composition intitulée « DM4 » est une formulation entrant dans le cadre de la présente invention. Elle comprend, en pourcentage massique de la composition totale, 63,7% d'Apolhya®, 27% de FR1025, 7,9% de Polytriox AOPE 8020 et 1,4% d'argile traitée organophile.
Exemple 4 : la composition intitulée « DM5 » est une formulation entrant dans le cadre de la présente invention. Elle comprend, en pourcentage massique de la composition totale, 67,7% d'Apolhya®, 24% de FR1025, 4,1% de Polytriox AOPE 8020 et 4,2% d'argile traitée organophile.
Exemple 5 : la composition intitulée « DM6 » est une formulation entrant dans le cadre de la présente invention. Elle comprend, en pourcentage massique de la composition totale, 68% d'Apolhya®, 25,4% de FR1025, 6% de Polytriox AOPE 8020 et 0,6% d'argile traitée organophile.
Exemple 6 : la composition intitulée « DM6 » est une formulation entrant dans le cadre de la présente invention. Elle comprend, en pourcentage massique de la composition totale, 65,8% d'Apolhya®, 24% de FR1025, 5,3% de Polytriox AOPE 8020 et 4,9% d'argile traitée organophile.
Exemple 7 : la composition intitulée « DM7 » est une formulation entrant dans le cadre de la présente invention. Elle comprend, en pourcentage massique de la composition totale, 63,70% d'Apolhya®, 27% de FR1025, 6% de Polytriox AOPE 8020 et 3,30% d'argile traitée organophile.
Exemple 8 : la composition intitulée « DM8 » est une formulation entrant dans le cadre de la présente invention. Elle comprend, en pourcentage massique de la composition totale, 62,3% d'Apolhya®, 25,9% de FR1025, 7,2% de Polytriox AOPE 8020 et 4,6% d'argile traitée organophile.
Exemple 9 : la composition intitulée « DM9 » est une formulation entrant dans le cadre de la présente invention. Elle comprend, en pourcentage massique de la composition totale, 67,7% d'Apolhya®, 25,2% de FR1025, 4,8% de Polytriox AOPE 8020 et 2,3% d'argile traitée organophile.
Exemple 10 : la composition intitulée « DM10 » est une formulation entrant dans le cadre de la présente invention. Elle comprend, en pourcentage massique de la composition totale, 64,7% d'Apolhya®1, 27,1% de FR1025, 6% de Polytriox AOPE 8020 et 2,2% d'argile traitée organophile.

Par ailleurs, pour comparer les exemples de l'invention vis-à-vis d'autres compositions thermoplastiques ignifuges, les exemples suivants de composition ont été proposés pour les tests.
Exemple 11 : la composition intitulée « DM11 » est une formulation de l'art antérieur comportant, en pourcentage massique de la composition thermoplastique, 44,60% de Bondine® HX8290, 19,10% de Domamid® 24, 27% de FR1025®, 6% de Polytriox AOPE 8020® et 3,30% d'argile traitée organophile.
Exemple 12 : La composition intitulée « DM12 » est une formulation comportant, en pourcentage massique de la composition thermoplastique, 78% d'Apolhya®, 20% d'Exolit® AP766 et 2% de Siliporite® NK10AP.
Exemple 13 : la composition intitulée « DM13 » est une formulation comportant 100% d'Apolhya®.
Exemple 14 : la composition intitulée « DM14 » est une formulation de l'art antérieur comportant 29% PA6, 11% de polypropylène (STAMILAN^{®} P), 5% TC Orgalloy et 55% d'agent ignifugeant Magnifin H5.
Exemple 15 : la composition intitulée «DM15 » est une formulation comportant, en pourcentage massique de la composition, 58,4% d'Apolhya®, 26% de FR1025 et 6% de Polytriox AOPE 8020, 9,6% d'argile traitée organophile.
Exemple 16 : la composition intitulée « DM16 » est une formulation comportant, en pourcentage massique de la composition, 71% d'Apolhya®, 21% de FR1025, 5% de Polytriox AOPE 8020, 3% d'argile traitée organophile.
Exemple 17 : la composition intitulée « DM17 » est une formulation comportant, en pourcentage massique de la composition, 74% d'Apolhya®, 21% de FR1025 et 5% de Polytriox AOPE 8020.
Exemple 18 : la composition intitulée «DM18 » est une formulation comportant, en pourcentage massique de la composition, 53% d'Apolhya®, 40% de FR1025 et 7% de Polytriox AOPE 8020.
Exemple 19 : la composition intitulée « DM19 » est une formulation comportant, en pourcentage massique de la composition, 66,8% d'Apolhya®, 27% de FR1025, 2,9% de Polytriox AOPE 8020, 3,3% d'argile traitée organophile.
Exemple 20 : la composition intitulée « DM20 » est une formulation comportant, en pourcentage massique de la composition, 67% d'Apolhya®, 23% de FR1025 et 10% de Polytriox AOPE 8020.

### Caractérisation des matériaux:

Les granulés sont mis en forme grâce à une extrudeuse double vis de laboratoire de type ThermoHaake Rheocord System 40 équipée d'une filière plate ; l'extrudeuse étant chauffée à 210°C pour donner des bandes à partir desquelles seront découpées les éprouvettes nécessaires afin de caractériser les matériaux.

Conformément aux objectifs de l'invention, la composition thermoplastique, pour être satisfaisante, doit présenter un classement UL94-V0, pour une éprouvette d'épaisseur définie (1.6 mm), soit le meilleur classement d'ignifugation. Cette mesure de résistance à la propagation de la flamme est mesurée par le test UL94 selon la norme ISO 1210 et fait l'objet dans le tableau ci-dessous du premier essai réalisé sur une éprouvette standard pour chaque composition.

Ensuite, la seconde ligne de caractérisations consiste à noter la génération ou pas de Gouttes Enflammées (GE) ou de Gouttes Non Enflammées (GNE) lors du test UL94. On notera que pour atteindre le classement V0 selon les tests de propagation de flamme UL 94, il est possible que des Gouttes Non Enflammées (GNE) apparaissent mais en aucun cas des Gouttes Enflammées (GE).

Le test de Fluage dans la flamme consiste à apprécier si l'éprouvette, soumise à la flamme, en première ou seconde application de celle-ci, flue sous son propre poids ou non.

Vient ensuite le test de fluage en étuve (à chaud et sous pression supérieure à la pression atmosphérique) pendant une certaine durée, en l'occurrence ce test de fluage des éprouvettes de type IFC découpées dans les films est réalisé à 200°C sous une charge de 2 MPa pendant 15 minutes et consiste à mesurer l'allongement subi par les éprouvettes. Si l'éprouvette cède sous la charge, on note le temps pour arriver à cette rupture. Ce test est connu par l'Homme de l'Art sous la dénomination de « hot set test ».

Les dernières caractérisations du tableau représentent les propriétés mécaniques ultimes des matériaux, en terme d'allongement et de contrainte à la rupture, mesurées selon la norme ISRO R527 : 93-1BA.

On considère qu'un matériau présente de bonnes propriétés mécaniques, en particulier dans les applications particulières des tuyaux, câbles et autres isolants du domaine électrique qui doivent pouvoir être pliés et étirés à volonté sans se rompre, lorsque cette valeur d'allongement à la rupture est supérieure à 100%.

Le test de contrainte à la rupture consiste en un essai de traction réalisé sur les éprouvettes standard de composition pour déterminer pour quelle force appliquée ces dernières cèdent ou se brisent. On considère qu'une éprouvette standard de composition thermoplastique testée satisfaisante doit pouvoir à minima résister à l'application d'une force d'au moins 7 MPa sans se briser. Ce test permet de mettre en évidence la solidité de la composition/matériau.

Les tests d'allongement et de contrainte à la rupture sont mesurés selon la norme ISO 527 : 93-1BA à partir des éprouvettes découpées dans les bandes de compositions thermoplastiques présentées ci-dessus.

Pour caractériser la résistance à la thermo-oxydation, on détermine le temps de demi-vie en allongement à la rupture, qui correspond au temps de vieillissement nécessaire, à une température donnée (150°C et 175°C en étuve ventilée thermorégulée à ±2°C), pour que le matériau perde la moitié de la valeur initiale de son allongement à la rupture. Par ailleurs, seule une composition selon l'invention a été testée (DM7) et comparer à deux compositions selon l'art antérieur (DM12 et DM13), étant entendu que les meilleurs résultats obtenues avec la formulation selon l'invention peuvent être généralisés à l'ensemble des compositions de l'invention.

Tous ces tests sont réalisés de façon classique en prenant des éprouvettes standards de forme identique pour chaque composition testée et en leur faisant subir chaque test sur banc d'essai, selon les définitions (forme, dimensions, vitesses d'essai, étalonnage de la machine, exactitude des appareils etc.) données par les normes internationales et bien connues de l'homme du métier.

La composition doit satisfaire l'ensemble des tests susvisés de manière optimum pour être considérée comme satisfaisante du point de vue de ces propriétés mécaniques, de ses propriétés thermomécaniques ou autrement dit de la conservation de ses propriétés mécaniques à température élevée, et enfin de ses propriétés ignifuges. Comme on peut le constater, la demanderesse a constaté, après ses expérimentations, que, de façon surprenante, la composition selon l'invention a parfaitement satisfait l'ensemble des tests démontrant que ses propriétés mécaniques, thermomécaniques et ignifuges sont excellentes, ou autrement dit d'un niveau très élevé.

### Résultats des tests réalisés sur les éprouvettes des différentes formulations :

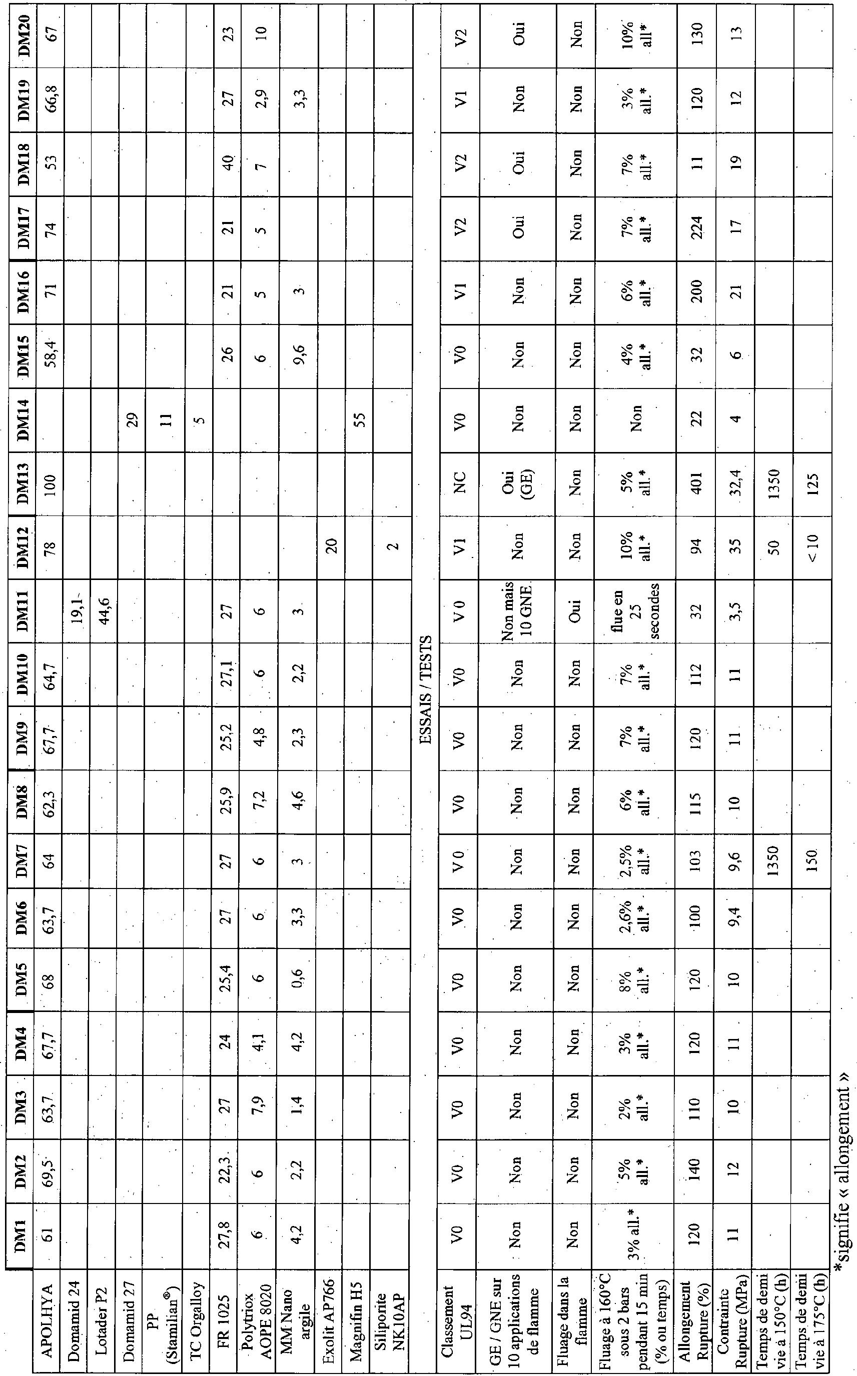

## Revendications

1. Composition ignifugée thermoplastique comprenant un copolymère greffé à blocs polyamides constitué d'un tronc en polyoléfine et d'en moyenne au moins un greffon en polyamide dans lequel les greffons sont attachés au tronc par les restes d'un monomère insaturé (X) ayant une fonction capable de réagir avec un polyamide, les restes du monomère insaturé (X) sont fixés sur le tronc par greffage ou copolymérisation depuis sa double liaison, **caractérisée en ce que caractérisée en ce que** la composition comprend :
- entre 60% et 70% en poids du copolymère greffé à blocs polyamides,
- entre 22% et 28% en poids de poly(pentabromobenzylacrylate),
- entre 4% et 8% en poids d'un agent ignifugeant de synergie choisi parmi le trioxyde d'antimoine, les dérivés de l'étain, du molybdène et/ou du bismuth ainsi que les oxydes de bore et zinc, les borates de calcium, le sulfate de calcium et/ou le stannate de zinc,
- entre 0.5 et 5% en poids d'argile traité organophile.

2. Composition selon la revendication 1, **caractérisée en ce que** le tronc en polyoléfine contenant (X) est choisi parmi les copolymères éthylène-anhydride maléique et éthylène-(méth)acrylate d'alkyle-anhydride maléique.

3. Composition selon la revendication 1 ou 2, **caractérisée en ce qu'**il y a au moins 1,3 moles de (X) attachées sur le tronc en polyoléfine.

4. Composition selon l'une quelconque des revendications précédentes, **caractérisée en ce que** le greffon en polyamide a une masse molaire comprise entre 1000 et 5000 g/mole et de préférence entre 2000 et 3000.

5. Composition selon l'une quelconque des revendications précédentes, **caractérisée en ce que** le copolymère greffé à blocs polyamide comprend de 10% à 50% en masse de greffons en polyamide.

6. Composition selon l'une quelconque des revendications précédentes, **caractérisée en ce que** le nombre de monomère (X) fixé sur le tronc polyoléfine est supérieur ou égal à 1,3 et/ou inférieur ou égal à 10.

7. Composition selon l'une quelconque des revendications précédentes, **caractérisée en ce que** l'argile traitée organophile est présent dans la composition, en poids, entre 1% et 4%,de préférence entre 2% et 3,5%.

8. Composition selon l'une quelconque des revendications précédentes, **caractérisée en ce que** le poly(pentabromobenzylacrylate) est présent dans la composition, en poids, entre 23% et 27%, de préférence entre 24% et 26%.

9. Composition selon l'une quelconque des revendications précédentes, **caractérisée en ce que** l'agent ignifugeant de synergie est présent dans la composition, en poids, entre 5% et 7%, de préférence entre 5,5% et 6,5%.

10. Composition selon l'une quelconque des revendications précédentes, **caractérisée en ce que** la composition consiste en un mélange du copolymère greffé à blocs polyamides, de poly(pentabromobenzylacrylate), de trioxyde d'antimoine et d'argile traité organophile.

11. Composition selon l'une quelconque des revendications précédentes, **caractérisée en ce qu'**elle comprend en outre des antioxydants, des anti U.V., des charges minérales, des pigments de coloration, des agents anti-gouttes et/ou des zéolithes.

12. Composition selon l'une des revendications précédentes, **caractérisée en ce que** le monomère insaturé (X) est l'anhydride maléique.

13. Composition selon l'une quelconque des revendications précédentes, **caractérisée en ce que** l'agent ignifugeant de synergie est le trioxyde d'antimoine.

14. Utilisation de la composition selon l'une quelconque des revendications précédentes en tant que couche de revêtement d'un câble ainsi que de pièces électriques telles que des connecteurs électriques ou en électrotechnique pour mouler des objets tels que des boîtiers.

15. Câble ou tuyau présentant au moins deux couches dont au moins une couche est formée par la susdite composition thermoplastique selon l'une quelconque des revendications 1 à 13.

## Patentansprüche

1. Flammgeschützte thermoplastische Zusammensetzung, umfassend ein Pfropfcopolymer mit Polyamidblöcken, bestehend aus einer Polyolefin-Hauptkette und durchschnittlich mindestens einem Polyamid-Pfropfanteil, worin die Pfropfanteile über die Reste eines ungesättigten Monomers (X) mit einer Funktion, die mit einem Polyamid reagieren kann, an die Hauptkette gebunden sind, die Reste des ungesättigten Monomers (X) durch Pfropfung oder Copolymerisation über seine Doppelbindung an der Hauptkette fixiert sind, **dadurch gekennzeichnet, dass** sie in Abmischung:
- zwischen 60 und 70 Gew.-% des Pfropfcopolymers mit Polyamidblöcken,
- zwischen 22 und 28 Gew.-% Poly(pentabrombenzyl-acrylat),
- zwischen 4 und 8 Gew.-% eines synergistischen Flammschutzmittels, das aus Antimontrioxid, Derivaten von Zinn, Molybdän und/oder Bismut sowie Bor- und Zinkoxiden, Calciumboraten, Calciumsulfat und/oder Zinkstannat ausgewählt ist,
- zwischen 0,5 und 5 Gew.-% organophilen behandelten Ton
umfasst.

2. Zusammensetzung nach Anspruch 1, **dadurch gekennzeichnet, dass** die (X) enthaltende Polyolefin-Hauptkette unter Ethylen-Maleinsäureanhydrid-Copolymeren und Ethylen-Alkyl(meth)acrylat-Maleinsäureanhydrid-Copolymeren ausgewählt ist.

3. Zusammensetzung nach Anspruch 1 oder 2, **dadurch gekennzeichnet, dass** mindestens 1,3 mol (X) an die Polyolefin-Hauptkette gebunden sind.

4. Zusammensetzung nach einem der vorhergehenden Ansprüche, **dadurch gekennzeichnet, dass** der Polyamid-Pfropfanteil eine Molmasse zwischen 1000 und 5000 g/mol und vorzugsweise zwischen 2000 und 3000 aufweist.

5. Zusammensetzung nach einem der vorhergehenden Ansprüche, **dadurch gekennzeichnet, dass** das Pfropfcopolymer mit Polyamidblöcken 10 bis 50 Gew.-% Polyamid-Pfropfanteile umfasst.

6. Zusammensetzung nach einem der vorhergehenden Ansprüche, **dadurch gekennzeichnet, dass** die Zahl der an der Polyolefin-Hauptkette fixierten Monomere (X) größer gleich 1,3 und/oder kleiner gleich 10 ist.

7. Zusammensetzung nach einem der vorhergehenden Ansprüche, **dadurch gekennzeichnet, dass** der organophile behandelte Ton in der Zusammensetzung in einer Menge zwischen 1 und 4 Gew.-% und vorzugsweise zwischen 2 und 3,5 Gew.-% vorliegt.

8. Zusammensetzung nach einem der vorhergehenden Ansprüche, **dadurch gekennzeichnet, dass** das Poly-(pentabrombenzylacrylat) in der Zusammensetzung in einer Menge zwischen 23 und 27 Gew.-% und vorzugsweise zwischen 24 und 26 Gew.-% vorliegt.

9. Zusammensetzung nach einem der vorhergehenden Ansprüche, **dadurch gekennzeichnet, dass** das synergistische Flammschutzmittel in der Zusammensetzung in einer Menge zwischen 5 und 7 Gew.-% und vorzugsweise zwischen 5,5 und 6,5 Gew.-% vorliegt.

10. Zusammensetzung nach einem der vorhergehenden Ansprüche, **dadurch gekennzeichnet, dass** die Zusammensetzung aus einer Mischung des Pfropfcopolymers mit Polyamidblöcken, von Poly(pentabrombenzylacrylat), von Antimontrioxid und von organophilem behandeltem Ton besteht.

11. Zusammensetzung nach einem der vorhergehenden Ansprüche, **dadurch gekennzeichnet, dass** sie außerdem Antioxidantien, UV-Stabilisatoren, mineralische Füllstoffe, Farbpigmente, Antitropfmittel und/oder Zeolithe umfasst.

12. Zusammensetzung nach einem der vorhergehenden Ansprüche, **dadurch gekennzeichnet, dass** es sich bei dem ungesättigten Monomer (X) um Maleinsäureanhydrid handelt.

13. Zusammensetzung nach einem der vorhergehenden Ansprüche, **dadurch gekennzeichnet, dass** es sich bei dem synergistischen Flammschutzmittel um Antimontrioxid handelt.

14. Verwendung der Zusammensetzung nach einem der vorhergehenden Ansprüche als Überzugsschicht für ein Kabel sowie für elektrische Bauteile wie elektrische Verbinder oder in der Elektrotechnik zum Abformen von Gegenständen wie Gehäusen.

15. Kabel oder Rohr mit mindestens zwei Schichten, von denen mindestens eine Schicht durch die obige thermoplastische Zusammensetzung gemäß einem der Ansprüche 1 bis 13 gebildet ist.

## Claims

1. A flame-retardant thermoplastic composition comprising a polyamide-block graft copolymer consisting of a polyolefin backbone and, on average, at least one polyamide graft wherein the grafts are attached to the backbone by the residues of an unsaturated monomer (X) having a function capable of reacting with a polyamide, the residues of the unsaturated monomer (X) are attached to the backbone by grafting or copolymerization via its double bond, **characterized in that** the composition comprises:
- between 60% and 70% by weight of the polyamide-block graft copolymer,
- between 22% and 28% by weight of poly(pentabromobenzyl acrylate),
- between 4% and 8% by weight of a synergistic flame retardant selected from antimony trioxide, derivatives of tin, molybdenum and/or bismuth and also boron and zinc oxides, calcium borates, calcium sulfate and/or zinc stannate,
- between 0,5% and 5% by weight of organophilic treated clay.

2. The composition as claimed in claim 1, **characterized in that** the polyolefin backbone containing (X) is selected from ethylene/maleic anhydride and ethylene/alkyl (meth)acrylate/maleic anhydride copolymers.

3. The composition as claimed in claim 1 or 2, **characterized in that** there are at least 1,3 mol of (X) attached to the polyolefin backbone.

4. The composition as claimed in any one of the preceding claims, **characterized in that** the polyamide graft has a molar mass between 1000 and 5000 g/mol and preferably between 2000 and 3000 g/mol.

5. The composition as claimed in any one of the preceding claims, **characterized in that** the polyamide-block graft copolymer comprises from 10% to 50% by weight of polyamide grafts.

6. The composition as claimed in any one of the preceding claims, **characterized in that** the number of monomers (X) attached to the polyolefin backbone is greater than or equal to 1.3 and/or less than or equal to 10.

7. The composition as claimed in any one of the preceding claims, **characterized in that** the organophilic treated clay is present in the composition at, by weight, between 1% and 4%, preferably between 2% and 3,5%.

8. The composition as claimed in any one of the preceding claims, **characterized in that** the poly-(pentabromobenzyl acrylate) is present in the composition at, by weight, between 23% and 27%, preferably between 24% and 26%.

9. The composition as claimed in any one of the preceding claims, **characterized in that** the synergistic flame retardant is present in the composition at, by weight, between 5% and 7%, preferably between 5,5% and 6,5%.

10. The composition as claimed in any one of the preceding claims, **characterized in that** the composition consists of a mixture of the polyamide-block graft copolymer, poly(pentabromobenzyl acrylate), antimony trioxide and organophilic treated clay.

11. The composition as claimed in any one of the preceding claims, **characterized in that** it also comprises antioxidants, UV stabilizers, mineral fillers, coloring pigments, anti-drip agents and/or zeolites.

12. The composition as claimed in one of the preceding claims, **characterized in that** the unsaturated monomer (X) is maleic anhydride.

13. The composition as claimed in any one of the preceding claims, **characterized in that** the synergistic flame retardant is antimony trioxide.

14. The use of the composition as claimed in any one of the preceding claims as a coating layer for a cable and also for electrical parts such as electrical connectors or in electrical engineering for molding articles such as housings.

15. A cable or pipe having at least two layers, at least one layer of which is formed by the aforesaid thermoplastic composition as claimed in any one of claims 1 to 13.
